# EUROPEAN PATENT APPLICATION

(11) **EP 3 825 264 A1**
(43) Date of publication of application: **26.05.2021**
(21) Application number: 20206641.1
(22) Date of filing: 10.11.2020
(51) Int. Cl.: B65G 47/68, B65G 47/90

(54) **MANIPULATOR FOR FEEDING PRODUCTS FROM TWO BRANCHES OF A PRODUCTION LINE TO SUBSEQUENT COMMON BRANCH**

(30) Priority: 15.11.2019 CZ 20190702
(71) Applicant: VÚTS, a.s., Liberec XI - Ruzodol I 460 01 Liberec (CZ)
(72) Inventor: Richter, Ales, 460 15 Liberec, Liberec XV-Stary Harcov (CZ); Palastuk, Petr, 460 07 Liberec, Liberec III-Jerab (CZ)
(74) Representative: Musil, Dobroslav

(57) **Abstract**

The invention relates to a manipulator for feeding products (B) from two branches of a production line into one subsequent common branch of the production line, which comprises a pair of synchronized movable gripping arms (11). One gripping arm (11) is displaceable by its gripper (111) between a point (H12) for grasping the product (B) in the first exit position (A1) from a pair of exit positions (A1) and an end point (H14) for transferring the product (B) to the common entry position (A2) and the second gripping arm (11) is displaceable by its gripper (111) between the point (H22) for grasping the product (B) in the second exit position (A1) from a pair of exit positions (A1) and the end point (H14) for transferring the product (B) to the common entry position (A2).

## Description

### Technical field

The invention relates to a manipulator for feeding products from two branches of a production line to a subsequent common branch which comprises a pair of synchronized movable gripping arms.

### Background art

In numerous production processes, it is necessary to combine the movement of objects from two parallel production lines into a single subsequent line to perform subsequent operations. An example of such production is the production of air filter cartridges, where the assembly line has two parallel assembly branches, which need to be merged at one point to one continuing common assembly branch. In this merging node of the assembly line, in which the handled objects (here air filter cartridges) are transferred from the so-called double bed at the end of both parallel branches of the assembly line to a single bed at the beginning of the continuing common branch of the assembly line, either human operator or a complex and expensive manipulator with a robotic arm is used. The disadvantage is operator fatigue and the risk of accidents and high cost and low operating speed of the robotic arm. Although it is also possible to use a classic rectangular manipulator here, it is too slow for use with a variety of production lines and thus slows down production. Moreover, it is more dimensionally demanding and requires more installation space.

The object of the invention is to eliminate or at least minimize the disadvantages of the background art.

### Principle of the invention

The object of the invention is achieved by a manipulator for feeding products from two branches of a production line to a continuing common branch, whose principle consists in that one gripping arm is displaceable by its gripper between the point of grasping the product in the first exit position from a pair of exit positions and the end point for transferring the product to a common entry position, and a second gripping arm is displaceable by its gripper between the point of grasping the product in the second exit position from the pair of exit positions and the end point for transferring the product to the common entry position.

The manipulator is suitable for tight spaces and is fast. Such transfer from two exit positions to one entry position is advantageous for achieving the desired working cycle of a crimping station if one assembly line terminated by one exit position is unable to achieve the desired working cycle for supplying the crimping station.

The advantage of the solution is a small installation space of the manipulator, about 300 mm, and a relatively large operation range of the manipulator, up to 800 mm. Another advantage is fast manipulation. If the grip and character of the product allow it, then a relatively high speed of the manipulator, up to 800 mm/s, is also an advantage. Another advantage is any programmable route with variable acceleration and speed, if necessary. Furthermore, a different route for grasping the product than in the case of a classic rectangular manipulator also appears to be advantageous.

In a preferred embodiment, each of the gripping arms is mounted rotatably about an axis transverse to the longitudinal axis of the gripping arm on a separate handling carriage which is linearly reciprocatingly mounted on the device frame, the two carriages being linearly reciprocatingly slidable towards and away from each other along a common axis, whereby each of the gripping arms is coupled to an individually controlled rotary drive mounted on the respective carriage and the carriages are coupled to a controlled drive of the linear reciprocating movement of each carriage, the controlled drives being coupled to a control device and connected to a power source, due to which the manipulator is relatively versatile, with a variety of options of the relative movement of the gripping arms and carriages.

To ensure simplicity of construction and versatility of control, the gripping arms are mounted by their first end on a vertically situated output shaft of a bidirectionally controlled rotary motor.

In terms of steering accuracy, each carriage is coupled to an individual linear drive unit which is coupled to the rotary motor via an angle gearbox.

To simplify the construction, both carriages are coupled to a common drive, whereby between each carriage and the common drive is arranged a drivetrain for the controlled movement of the carriages.

To ensure the desired rigidity of the manipulator assembly, the carriages are mounted reciprocatingly slidably on a longitudinal frame which is equipped with guide components to ensure accurate and smooth movement of the carriages along the frame.

### Description of drawings

The invention is schematically represented in the drawing, wherein Fig. 1 shows the manipulator according to the invention arranged between an assembly station at the end of a pair of branches of a production line (on the right hand side) and the beginning of a crimping station (on the left hand side) with a common production branch, Fig. 2 shows a mechanical arrangement of the manipulator according to the invention, Fig. 3a shows a ground plan of the manipulator with an indicated path of the gripping arms, Fig. 3b shows a detail of the path of the gripping arms movement between the assembly station at the end of the pair of branches of the production line (on the right hand side) and the beginning of the crimping station (on the left hand side) with the common production branch.

### Examples of embodiment

The invention will be described with reference to an exemplary embodiment of a manipulator **1** to handle air filter cartridges **B** for car engines at the point of technological merge of two production branches of an assembly line into one common subsequent branch, i.e., at the point at which the air filter cartridges are transferred (handled) from two exit positions **A1** of a rotary table **2** at the end of two production branches of an unillustrated assembly line of air filter cartridges **B** to one entry position **A2** of a conveyor **30** at the beginning of a crimping station **3,** i.e., a device for connecting firmly the bottom of a cartridge **B** with the shell of a cartridge **B.** In both exit positions **A1** of the rotary table **2** the cartridge **B** assembly is already complete, i.e., no part is missing, whereby in the entry position **A2** the cartridge **B** assembly is sealed, i.e., the lower lid of the cartridge **B** is undetachably connected to the container of the cartridge **B** which comprises all components of the cartridge.

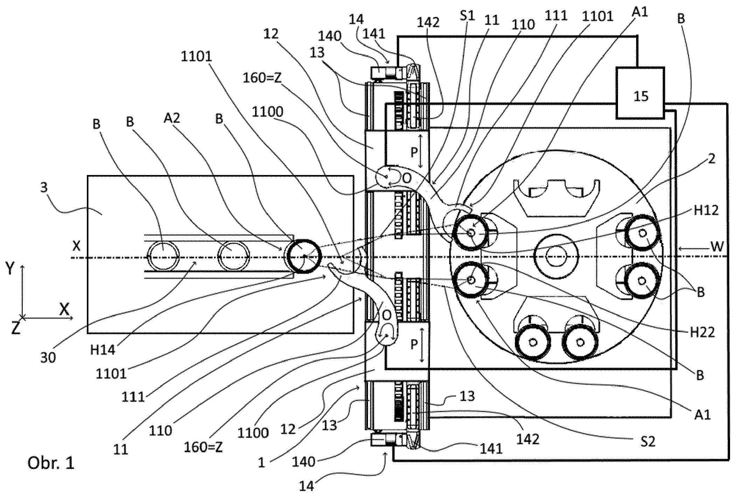

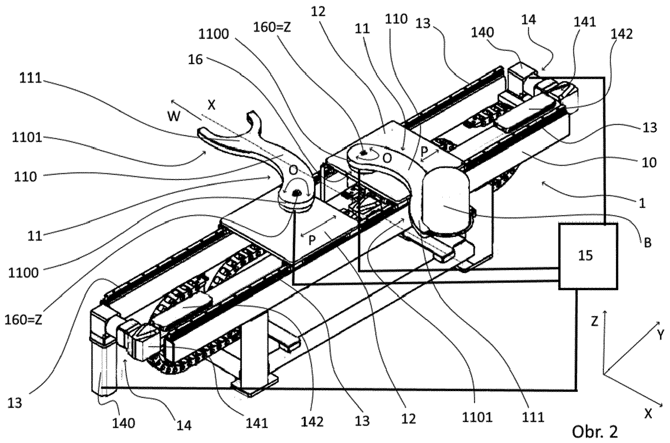

The manipulator **1** comprises a longitudinal frame **10** which is arranged with its length across the working direction **W** of the production line of air filter cartridges **B.** Two handling carriages **12** are mounted linearly reciprocatingly displaceable in the direction of the length of the frame **10.** Each carriage **12** is arranged on the frame **10** on one side of the frame **10** length from the central **X** axis, as seen in the figures, where the central **X** axis of the frame **10** lies in the working direction **W.** Each carriage **12** is thus displaceable towards the central **X** axis and away from the central **X** axis, or perpendicularly to the central **X** axis and perpendicularly away from the central **X** axis, as indicated in Figs. 1 and 2 by the bidirectional arrow **P.** The handling carriages **12** are thus controllably linearly reciprocatingly displaceable, perpendicularly to the central **X** axis of the manipulator **1** towards each other and away from each other.

To ensure the linear reciprocating movement of the carriages **12** along the frame **10,** the carriages **12** and the frame **10** are provided with suitable linear guide components, e.g., with planar guide surfaces, or shaped guide surfaces **13,** or linear guides with rolling elements (a ball or roller track), etc., which ensure accurate and smooth movement of the carriages **12** along the frame **10** with the desired rigidity.

To ensure the controlled linear reciprocating movement of the carriages **12** along the frame **10,** each carriage **12** is coupled to a drive. In an exemplary embodiment shown, each carriage **12** is coupled to its own, i.e., individual drive **14** of its controlled linear reciprocating movement along the frame **10.** The individual drive **14** of the controlled reciprocating linear movement of the carriage **12,** for example, comprises a rotary motor **140,** which is via an angle gearbox **141** coupled to a linear driving unit **142,** to the movable part of which is coupled the respective carriage **12.** In an unillustrated exemplary embodiment, both carriages **12** are coupled to a common drive, whereby a suitable drivetrain (not shown) is arranged between each carriage **12** and the common drive, e.g., a belt drive, a chain drive for a toothed wheel on the carriage **12,** which engages with a linear toothed rack arranged on the frame **10** perpendicularly relative to the central X axis of the manipulator, etc. In another unillustrated example of embodiment, the drive train of the carriage **12** is formed by a ball screw.

Each drive of the controlled linear reciprocating movement of the carriage **12** is coupled to a control device **15.**

A gripping arm **11** is mounted displaceable on each carriage **12,** wherein each gripping arm comprises a longitudinal arm **110** which is situated in a horizontal plane **X-Y.** The arm **110** of the gripping arm **11** is by its first end **1100** mounted reciprocatingly rotatably in the direction **O** about the vertical **Z** axis on the carriage **12,** and so the arm **110** is movable in a horizontal plane **X**-**Y**, whereby the arm **110** of the gripping arm **11** is coupled to a controllable bidirectional drive of the rotation of the gripping arm **11** about the vertical **Z** axis in the direction **O** in the plane **X**-**Y**.

In an exemplary embodiment shown, the arm **110** of the gripping arm **11** is mounted by its first end **1100** on a vertically situated output shaft **160** of a bidirectionally controlled rotary motor **16,** here a geared motor **16** which is, for example, provided with a controlled brake. The motor **16** is mounted on the respective carriage **12** and is coupled to the control device **15.**

Each gripping arm **11** is at its other free end **1101** provided with a gripper **111** adapted to grasp handled components, in this particular example of embodiment to grasp an air filter cartridge **B** for car engines to transfer this cartridge **B** from the respective exit position **A1** from a pair of exit positions **A1** of the rotary table **2** at the end of two production lines of an unillustrated assembly line of air filter cartridges **B** to one entry position **A2** of the conveyor **30** at the beginning of the crimping station **3.**

Each gripping arm **11** is in principle a combined manipulating element, combining a simultaneous uniaxial linear reciprocating movement in the horizontal plane **X-Y** in the **Y** axis direction with rotation in the horizontal plane **X-Y** about the vertical **Z** axis. The linear reciprocating movement in the horizontal plane **X-Y** in the direction of the **Y** axis is performed by the carriages **12** along the guide **13** on the frame **10** and rotation in the horizontal plane **X-Y** about the vertical **Z** axis is performed by the controllable bidirectional drive of the rotation of the gripping arm **11**, for example by a rotary drive **16** on each carriage **12.**

The gripper **111** of each gripping arm **11** can thus perform a very complex path in the horizontal plane **X**-**Y**, without mutual contact of the gripping arms **11** or the transported parts, here the cartridges **B,** while using the relatively small installation space of the manipulator and achieving the required (high) speed and accuracy.

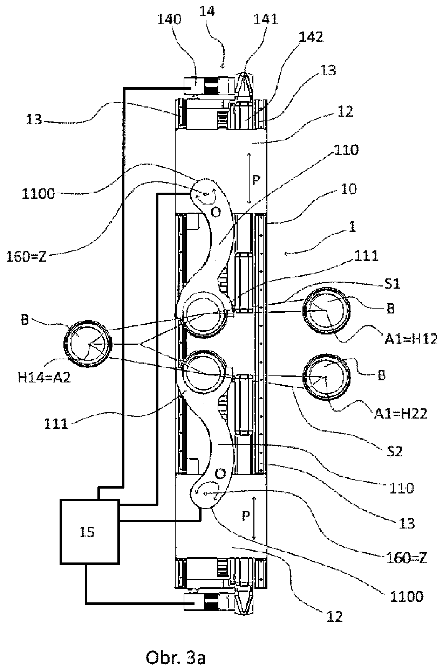

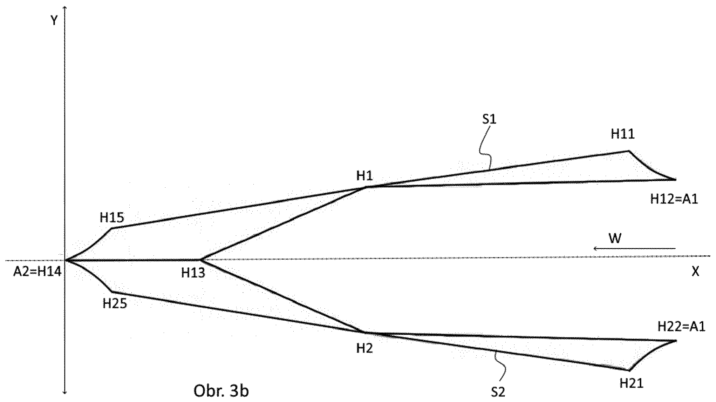

In an illustrated exemplary embodiment of the manipulator **1** for air filter cartridges from two exit positions **A1** of the rotary table **2** at the end of two production lines of an unillustrated assembly line of air filter cartridges **B** to one entry position **A2** of the conveyor **30** at the beginning of the crimping station **3,** see Figs. 1 and 3, the gripper **111** of the upper gripping arm **11** moves between the upper position **A1** and the common position **A2** along a special curve **S1**, whereby, in order to avoid a mutual collision, the gripper **111** of the lower gripping arm **11** moves between the lower position **A1** and the common position **A2** along a special curve **S2,** to which is adapted also the mutual collaboration of the linear drive **14** of each carriage **12** along the guide **13** and of the controllable bidirectional rotation drive, here, for example, the motor **16** of the respective gripping arm **11** on the respective carriage **12.** The drives are movably connected to each other (coordinated) and are preferably provided with "slow" gears to ensure the required dynamics.

In an illustrated exemplary embodiment, to transfer cartridges **B,** where both grippers **111** are arranged symmetrically with respect to the central X axis, the path **S2** of the lower gripper **111** is a path **S1** of the upper gripper **111,** which is mirror-inverted along the **X**-axis.

In order to optimize the path **S1**, **S2** and to optimize the grasping of the cartridge **B** by the grippers **111,** each gripping arm **11** is bent from its first end **1100** to the second end **1101** in the direction away from the pair of positions **A1** towards the common position **A2,** whereby the grippers **111** are rotated in the direction opposite this bend of the gripping arms **11.** Consequently, the grippers **111** are oriented directly opposite each other at the centre point **H1, H2** of their path **S1**, **S2**, as shown in Fig. 3a.

Fig. 3b shows an example of arrangement of the path **S1** of the movement of the centre point of the upper gripper **111** between the upper position **A1** and the common position **A2.** The upper gripper **111** moves from the centre point **H1** along a linear path oblique to the direction of the **X** axis to the point **H11** to a level before the exit position **A1.** It then continues from the point **H11** along a rounded path towards the central **X** axis to the point **H12**, which is determined by the upper position **A1** of the cartridge **B** in the upper branch of the assembly line **2** of cartridges **B.** The shape of the path shown here is basically determined by the shape of the manipulated product (here cartridge **B**) and the space and time requirements for the insertion (snapping, gripping) of the manipulated product (here the cartridge **B**). For the embodiment shown, handling a product of larger dimensions and/or different shape would result in a collision of the handled products or the grippers **111.** During reaching the point **H12,** the upper gripper **111** is pushed onto the cartridge **B** prepared in the upper position **A1.** After the gripper **111** has reached the point **H12** completely and the cartridge B has been fully gripped, the upper gripper **111** moves along a linear path substantially in the direction of the **X** axis towards the common position **A2** back to the centre point **H1**, from which it then moves further along the linear path oblique to the direction of the **X** axis towards the central **X** axis to the point **H13,** from which the upper gripper **111** moves further along the linear path in the central **X** axis to the end point **H14**, which is determined by the common position **A2** of the cartridge **B** at the entrance of the crimping station **3.** From the point **H14,** the upper gripper **111** further moves along a rounded path away from the central **X** axis to the point **H15**, whereby during this movement, the upper gripper **111** is extended from the cartridge **B** now caught in the common position **A2,** while at the point **H15** the cartridge **B** is completely outside the upper gripper **111.** This path, too, is in principle determined by the shape and size of the manipulated product and the space and time requirements for the removal (snapping, release) of the manipulated product (here cartridge **B**). For the embodiment shown, handling a product of larger dimensions and/or different shape would result in a collision of the handled products or grippers **111.** From the point **H15,** the upper gripper **111** further moves obliquely to the **X** axis along a linear path to the centre point **H1**. All the described movements of the upper gripper **111** are performed by combining the linear reciprocating movement of the upper carriage **12** in the direction of the **Y** axis and the rotation of the upper gripping arm **11** about the **Z** axis.

Adequately to the movement of the upper gripping arm **11** in the opposite tact and along the path **S2**, which is path **S1**, mirror-inverted along the central X axis, the gripper **111** moves between the lower position **A1** and the common position **A2.** During the movement of the upper gripper **111** from the centre point **H1** to the point **H11,** the lower gripper **111** moves along a linear path obliquely to the direction of the **X** axis from its centre point **H2** to the point **H13** and further along a linear path in the central **X** axis to the end point **H14,** which is determined by the common position **A2** of the cartridge **B** at the entrance of the crimping station **3.** Subsequently, during the movement of the upper gripper **111** from the point **H11** to the point **H12,** the lower gripper **111** moves along a rounded path away from the central **X** axis from the point **H14** to the point **H25,** whereby during this movement, the lower gripper **111** is extended from the cartridge **B** now caught in the common position **A2,** whereby at the point **H25,** the cartridge **B** is completely outside the lower gripper **111.** During the movement of the upper gripper **111** from the point **H12** to the centre point **H1,** the lower gripper **111** moves obliquely with respect to the **X** axis along a linear path from the point **H25** to the centre point **H2.** During the movement of the upper gripper **111** from the centre point **H1** to the point **H13** and subsequently **H14,** the lower gripper **111** moves along a linear path substantially in the direction of the **X** axis to the point **H21,** from where during the movement of the upper gripper **111** from the point **H14** to the point **H15,** the lower gripper **111** moves along a rounded path towards the central **X** axis to the point **H22,** which is determined by the lower position **A1** of the cartridge **B** in the lower branch of the assembly line **2** of the cartridges **B.** As the lower gripper **111** reaches the point **H22,** the lower gripper **111** is pushed onto the cartridge **B** prepared in the lower position **A1.** After the gripper **111** has reached the point **H22** completely and the cartridge **B** has been fully gripped, the upper gripper **111** moves along a linear path substantially in the direction of the **X** axis towards the common position **A2** back to the centre point **H2,** whereby the upper gripper **111** moves from the point **H15** to its centre point **H1**. All the described movements of the upper gripper **111** are performed by combining the linear reciprocating movement of the upper carriage **12** in the direction of the **Y** axis and the rotation of the lower gripping arm **11** about the **Z** axis.

In the middle region of the paths **S1**, **S2**, i.e., in the region between the points **H12** to **H13** and **H15** to **H11** by the path **S1** and in the region between the points **H22** to **H13** and **H25** to **H21,** the upper and the lower grippers **111** pass each other, when one of the grippers **111** holds the cartridge **B** transported to the position **A2** and the other gripper **111** is empty, because it moves to its position **A1.**

In an exemplary embodiment shown, the relative movement of the two grippers **111** and carriages **12 is** phased, for example by moving one gripper **111** and the carriage **12** from one point to another, and after the gripper **111** along with the carriage **12** reach the other point, the gripper **111** with the carriage **12** stops and waits until the second gripper **111** with the second carriage **12** makes its respective movement. Due to the software control of the manipulator, it is also possible to realize different phasing or a different course of movements of the grippers **111** and their carriages **12.**

As already mentioned above, the grippers **111** can, thanks to the arrangement of the manipulator, perform a substantially arbitrarily programmed path of their movement in their range which is limited only by the extreme positions of the carriages **12** on the guides **13** and the length of the gripping arms **11,** where the substantially arbitrarily programmed path of the movement of the gripping arms **11** is determined by combining uniaxial reciprocating sliding motion in the direction of the **Y** axis and rotational movement about the **Z** axis, i.e., the axis perpendicular to the horizontal plane **X**-**Y**, especially if the drives (both linear and rotary) are servomotors with absolute encoders.

### Industrial applicability

The invention is applicable in handling technology at the points of connection of two production branches into one subsequent branch, e.g., in the assembly of air filter cartridges for car engines.

## Claims

1. A manipulator for feeding products (B) from two branches of a production line into one subsequent common branch of the production line, which comprises a pair of synchronized movable gripping arms (11), **characterized in that** one gripping arm (11) is by its gripper (111) displaceable between a point (H12) for grasping the product (B) in the first exit position (A1) from a pair of exit positions (A1) and an end point (H14) for transferring the product (B) to a common entry position (A2) and the second gripping arm (11) is by its gripper (111) displaceable between the point (H22) for grasping the product (B) in the second exit position (A1) from a pair of exit positions (A1) and the end point (H14) for transferring the product (B) to the common entry position (A2).

2. The manipulator according to claim 1, **characterized in that** each of the gripping arms (11) is mounted rotatably about an axis transverse to the longitudinal axis of the gripping arm (11) on one independent handling carriage (12), which is mounted linearly reciprocatingly slidingly on the frame (10) of the device, whereby both carriages (12) are linearly reciprocatingly sliding along the common axis towards each other and away from each other, whereby each of the gripping arms (11) is coupled to an individually controlled rotary drive mounted on the respective carriage (12) and the carriages (12) are coupled to a controlled drive of the linear reciprocating movement of each carriage (12), whereby the controlled drives are coupled to a control device (15) and are connected to a power source.

3. The manipulator according to claim 2, **characterized in that** the gripping arms (11) are by their first ends (1100) mounted on a vertically situated output shaft (160) of a bidirectionally controlled rotary motor (16).

4. The manipulator according to claim 2, **characterized in that** each carriage (12) is coupled to an individual linear driving unit (142), which is coupled to a rotary motor (140) via an angle gearbox (141).

5. The manipulator according to claim 2, **characterized in that** both carriages (12) are coupled to a common drive, whereby a drivetrain for the controlled movement of the carriages is arranged between each carriage (12) and the common drive.

6. The manipulator according to any of claims 1 to 5, **characterized in that** the carriages (12) are mounted reciprocatingly slidably on the longitudinal frame (10), which is equipped with guide components for the accurate and smooth movement of the carriages (12) along the frame (10).
